(19) Europäisches Patentamt
European Patent Office
Office européen des brevets

(11) **EP 2 211 441 A2**

## (12) EUROPEAN PATENT APPLICATION

(43) Date of publication:
**28.07.2010 Bulletin 2010/30**

(51) Int Cl.:
***H02J 7/00*** (2006.01)

(21) Application number: **10000728.5**

(22) Date of filing: **25.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **27.01.2009 JP 2009014899**

(71) Applicant: **Sharp Kabushiki Kaisha**
**Osaka-shi, Osaka 545-8522 (JP)**

(72) Inventors:
• **Matsui, Ryoji**
  **Osaka-shi**
  **Osaka 545-8522 (JP)**
• **Nishimura, Kazuhito**
  **Osaka-shi**
  **Osaka 545-8522 (JP)**

(74) Representative: **Müller - Hoffmann & Partner**
**Patentanwälte**
**Innere Wiener Strasse 17**
**81667 München (DE)**

(54) **Secondary battery protection circuit**

(57)     A secondary battery protection circuit has: a first switch that permits or inhibits charging of a secondary battery by switching a charge conductor between a conducting and a non-conducting state; a voltage detection portion that monitors the voltage of the secondary battery to output an error signal when the voltage is an overvoltage; and a first current path that has one end connected to the positive-side conductor and the other end connected to the negative-side conductor, and through which a current corresponding to the supplied electric power passes. The first current path, other than during charging of the secondary battery, is kept in a non-conducting state and, when the error signal is outputted while the first current path is in a conducting state, is irreversibly brought into a non-conducting state by a current of a predetermined amount or more passing therethrough. The first switch, when the first current path is in a conducting state, permits charging and, when the first current path is in a non-conducting state, inhibits charging. Thus, other than during charging, electric power consumption associated with overcharge protection is reduced, and once an overcharged state occurs, charging never again takes place.

FIG.1

EP 2 211 441 A2

**Description**

**BACKGROUND OF THE INVENTION**

1. Field of the Invention

The present invention relates to a secondary battery protection circuit that charges a secondary battery while protecting it from overcharging and the like.

2. Description of Related Art

Recent years have seen the spread of dispersed power source systems as an energy supply system with reduced $CO_2$ emission. In a dispersed power source system, electric power produced by natural energy power generation, such as with solar batteries and by wind power, is converted to AC (alternating-current) power of a commercial frequency, which is then supplied to a commercial electric power network or to an AC load.

A power supply or the like employing natural energy produces a varying output according to natural conditions such as the amount of solar radiation and the amount of wind, and thus requires a power storage facility to compensate for the variation and thereby obtain a stable output. The amount of energy to be stored in such a power storage facility depends on the period of the variation that needs to be leveled out to which natural energy power generation is subject.

A solar light power generation system installed in a common house is provided with a solar battery with a capacity of 3 to 5 kW, while the solar battery may generate an energy of 9 to 15 kWh per day. Accordingly, to store the electric power produced by solar light power generation during the day for use at night, it is considered that a power storage facility with a capacity as high as several kWh is needed, though depending on the magnitude of the power load of the house during the night.

Against this background, in these days, attention has been paid to lithium-ion secondary batteries as rechargeable batteries for use in high-capacity power storage facilities as describe above. For their high energy density, high charge/discharge efficiency, hermeticity, and other advantages, lithium-ion secondary batteries hold promise as rechargeable batteries that offer high capacity in compact size combined with long operating life.

Lithium-ion secondary batteries produce different voltages depending on their positive- and negative-electrode materials. Those using graphite as the negative-electrode material produce a voltage of about 3 to 4 V per cell. A large number of such cells may be connected in series to build an assembled battery producing a voltage of 100 to 200 V, which can then be used in a high-capacity power storage facility.

In such an assembled lithium-ion secondary battery, if the voltage across a cell becomes higher than the upper limit voltage or lower than the lower limit voltage, the battery as a whole may break or be irrecoverably damaged. It is therefore necessary to monitor the voltage across each and every cell in the management of charging and discharging. It is also important, in the charging, discharging, etc. of a secondary battery, to reduce unnecessary power consumption as much as possible.

As a conventional technology addressing these problems, JP-A-H8-37737 (Patent Document 1) discloses a secondary battery protection device comprising, at least: a positive terminal and a negative terminal through which DC (direct-current) power is received from and supplied to a charger or a load; an electric path cut-off device that is inserted in the electric path between those terminals in series with a secondary battery; and an overcharge detection circuit that detects the capacity of the secondary battery to check whether it is in an overcharged state or not and that, when the secondary battery is in an overcharged state, cuts off the electric path by driving the electric path cut-off device. Here, the secondary battery protection device further comprises a start-up control circuit that checks whether the secondary battery is in a charging or discharging state by detecting the potential difference across, or the power variation direction in, the electric path cut-off device, and that, only when the secondary battery is in a charging state, permits the operation of the overcharge detection circuit.

Other documents directed to conventional technologies include JP-A-2001-37096 and JP-A-2003-132862. With the technology disclosed in Patent Document 1, it is indeed possible to inhibit the overcharge detection circuit from being started up during charging, and thereby reduce unnecessary power consumption.

When a lithium-ion secondary battery is overcharged, however, there are risks of excessive heating from a decomposition reaction of the electrolyte solution inside the battery, and excessive heating or ignition from an internal short circuit resulting from precipitation of metal lithium. Thus, it is essential to doubly protect against overcharging.

The technology of Patent Document 1 achieves protection operation by the provision of two detection circuits against overdischarging and another two against overcharging. Here, however, the protection at the high-voltage side should be protection of last resort, meaning that it needs to be irrecoverable protection which, once activated, never again permits charge operation. Patent Document 1 is not directed to any such technology.

Incidentally, a mode of a MOSFET or IGBT used as a cut-off device has been reported in which it fails in an ON state (and does not return to an OFF state). Patent Document 1 is not directed, either, to any technology addressing this problem.

## SUMMARY OF THE INVENTION

The present invention is devised to solve the problems discussed above, and it is an object of the invention to provide a secondary battery protection circuit that reduces power consumption associated with overcharge protection other than during charging and that never again permits charge operation once an overcharged state arises.

To achieve the above object, according to the invention, a secondary battery protection circuit that includes a positive terminal connected to the positive electrode of a secondary battery, a negative terminal connected to the negative electrode of the secondary battery, and a charge conductor having a positive-side conductor connected between an external power source and the positive terminal and a negative-side conductor connected between the external power source and the negative terminal, and that delivers electric power supplied from the external power source through the charge conductor to the secondary battery to charge the secondary battery, is provided with: a first switch that permits or inhibits the charging of the secondary battery by switching the charge conductor between a conducting and a non-conducting state; a voltage detection portion that monitors the voltage of the secondary battery to output an error signal when the voltage is an overvoltage; and a first current path that has one end connected to the positive-side conductor and another end connected to the negative-side conductor, and through which a current corresponding to the supplied electric power passes. Here, the first current path, other than during charging of the secondary battery, is kept in a non-conducting state and, when the error signal is outputted while the first current path is in a conducting state, is irreversibly brought into a non-conducting state by a current of a predetermined amount or more passing therethrough. Moreover, the first switch, when the first current path is in a conducting state, permits charging and, when the first current path is in a non-conducting state, inhibits charging.

With this configuration, when overcharging is detected during charging of the secondary battery, the first current path irreversibly enters a non-conducting state, and thus charging is permanently inhibited. This makes it possible to inhibit the secondary battery from ever again being charged once it has entered an overcharged state. In addition, the first current path remains in a non-conducting state other than during charging of the secondary battery (it can safely be said, in this status, there is no need for protection against overcharging), and this makes it possible to reduce electric power consumption in the first current path, etc. It is easily achievable, for example by insertion of a current fuse, to irreversibly bring the first current path into a non-conducting state on passage therethrough of a current of a predetermined amount or more.

In the above configuration, preferably, the first current path is formed by a variable resistor portion and a cut-off device connected in series, the variable resistor portion is formed by a second switch and a predetermined resistor device connected in parallel, the second switch entering into a conducting state when the error signal is outputted, and, when the second switch enters a conducting state, the current passing through the first current path becomes the predetermined amount or more.

With this configuration, it is easily achievable to increase the current passing through the first current path to the predetermined amount or more when the error signal is outputted.

In the above configuration, preferably, there is additionally provided a charge signal output portion that outputs a predetermined charge signal during the charging of the secondary battery, and the first current path is formed by the variable resistor portion, the cut-off device, and a third switch connected in series, the third switch entering into a conducting state when the charge signal is outputted.

With this configuration, it is easily achievable to keep the first current path in a non-conducting state other than during charging of the secondary battery.

In the above configuration, preferably, the charge signal output portion has a second current path formed by two bias resistor devices and the secondary side of an isolated signal transfer device connected in series between the positive- and negative-side conductors, and during charging of the secondary battery, the charge signal output portion passes a current through the primary side of the isolated signal transfer device to make the secondary side of the isolated signal transfer device conduct, so as to output as the charge signal a voltage or a current produced as a result of the secondary side of the isolated signal transfer device conducting.

In the above configuration, preferably, there is additionally provided a monitoring portion that monitors whether or not the charge signal is being outputted, whether or not the error signal is being outputted, and whether or not the secondary battery is being charged.

In the above configuration, preferably, on detecting that the charge signal is being outputted, that the error signal is being outputted, and that the secondary battery is being charged, the monitoring portion outputs a signal indicating that such detection has been made to outside, or cuts off the charge conductor.

With this configuration, for example, even when a failure of the first switch prevents it from entering a non-conducting state, it is possible to minimize excessive charging of the secondary battery. It is thus possible to further enhance the safety of the secondary battery protection circuit.

In the above configuration, preferably, there is additionally provided an overtemperature signal output portion that outputs a predetermined overtemperature signal when the temperature of a device forming the first switch is higher than a predetermined threshold value, and the second switch enters a conducting state also when the overtemperature signal is outputted.

## BRIEF DESCRIPTION OF THE DRAWINGS

The above and other objects and features of the present invention will become clear from the following description, taken in conjunction with the preferred embodiments with reference to the accompanying drawings in which:

Fig. 1 is a configuration diagram of a secondary battery protection circuit according to Example 1 of the invention; and

Fig. 2 is a configuration diagram of a secondary battery protection circuit according to Example 2 of the invention.

## DETAILED DESCRIPTION OF PREFERRED EMBODIMENTS

Hereinafter, the present invention will be described by way of embodiments, namely Examples 1 and 2.

**Example 1**

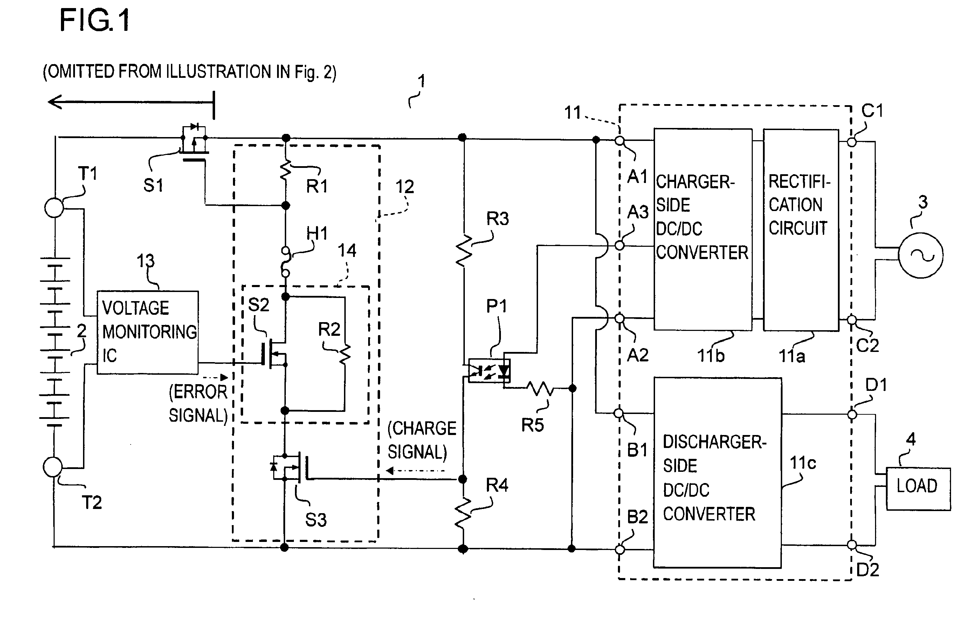

The configuration of a secondary battery protection circuit according to one embodiment (Example 1) of the invention is shown in Fig. 1. As shown in the figure, the secondary battery protection circuit 1 is provided with a charger/discharger 11, a first current path 12, a voltage monitoring IC 13, a switching device (MOSFET) S1, resistors R3 to R5, a photocoupler P1, a positive terminal T1, a negative terminal T2, and other components.

To the positive terminal T1, the positive electrode of a secondary battery 2 (a lithium-ion secondary battery) is connected, and to the negative terminal T2, the negative electrode of the secondary battery 2 is connected. Adopted as the secondary battery 2 here is one that yields 50 V when fully charged and about 40 V when sufficiently discharged.

The charger/discharger 11 is provided with a rectification circuit 11a, a charger-side DC/DC converter 11b, and a discharger-side DC/DC converter 11c. The charger/discharger 11 is also provided with the following terminals: terminals A1 and B1 connected through the switching device S1 to the positive terminal T1; terminals A2 and B2 connected to the negative terminal T2; terminals C1 and C2 connected to an electric power network 3; and terminals D1 and D2 connected to a load 4. The electric power network 3 (an external power source) supplies charge electric power to the secondary battery 2, and the load 4 receives discharge electric power from the secondary battery 2. As the case may be, there may be provided a state in which electric power from the electric power network 3 is supplied through the charger/discharger to the load 4 without going through the secondary battery 2.

The rectification circuit 11a rectifies the electric power supplied through the terminals C1 and C2 from the electric power network 3, and delivers the result to the charger-side DC/DC converter 11b. The charger-side DC/DC converter 11b adjusts the voltage of the charge electric power thus delivered from the rectification circuit 11a, and outputs the result via the terminals A1 and A2 to the secondary battery 2. The discharger-side DC/DC converter 11c adjusts the voltage of the discharge electric power supplied from the secondary battery 2, and outputs the result via the terminals D1 and D2 to the load 4.

The charger-side DC/DC converter 11b feeds a predetermined voltage to a terminal A3 provided in the charger/discharger 11 during charging of the secondary battery 2 and otherwise feeds thereto a voltage equal to that at the terminal A2. Thus, during charging of the secondary battery 2, the charger/discharger 11 passes a predetermined current through the primary side of the photocoupler P1, which is connected between the terminals A3 and A2, and thereby makes the secondary side of the photocoupler P1 conduct.

With the configuration described above, when the electric power network 3 is connected to the terminals C1 and C2, charging operation starts. Specifically, through a charge conductor comprising one (the positive-side conductor) connecting between the terminal A1 and the positive terminal T1 and one (the negative-side conductor) connecting between the terminal A2 and the negative terminal T2, the electric power network 3 is connected to the secondary battery 2, and the secondary battery 2 receives charge electric power from the electric power network 3. When the switching device S1 is in a non-conducting state, however, the positive-side conductor also is non-conducting, and thus charging is inhibited. The charger/discharger 11 may be so configured as to start charging on receiving a predetermined "charge" instruction from the voltage monitoring IC 13.

On the other hand, when the load 4 is connected to the terminals D1 and D2, and in addition the load 4 is requesting supply of electric power (for example when a user or the like has turned ON the power switch on the load 4), discharging operation starts.

The first current path 12 is, at one end (positive-side end), connected to between the terminal A1 and the switching device S1, and, at the other end (negative-side end), connected to between the terminal A2 and the negative terminal T2. The first current path 12 is formed by a resistor R1, a current fuse H1, a variable resistor portion 14, and a switching device (MOSFET) S3 connected in series in this order from the positive to negative side.

More specifically, one end of the resistor R1 is connected to between the terminal A1 and the source of the switching device S1, and the other end of the resistor R1 is connected to one end of the current fuse H1. One end of the variable resistor portion 14 is connected to the other end of the current fuse H1, and the other end of the variable resistor portion 14 is connected to the drain of the switching device S3. The source of the switching device S3 is connected to between the terminal A2 and the negative terminal T2. The gate of the switching device S1 is connected to between the resistor R1 and the current fuse H1.

The variable resistor portion 14 is formed by a switching device (MOSFET) S2 and a resistor R2 connected in parallel with each other. Thus, unless an error signal, which will be described later, is fed in, the variable resistor portion 14 has a resistance approximately equal to that of the resistor R2; by contrast, when the error signal is fed in, the switching device S2 enters a conducting state, and makes the resistance of the variable resistor portion 14 negligibly low.

The voltage monitoring IC 13 continuously monitors the voltage between the positive and negative terminals T1 and T2 (that is, the voltage of the secondary battery 2); when the voltage being monitored exceeds 51 V, the voltage monitoring IC 13 generates a signal (error signal) indicating that the secondary battery 2 is in an overcharged state (or an abnormal state such as one in which a cell is overcharged), and outputs it to the gate of the switching device S2.

In the primary side of the photocoupler P1 (which may be regarded as an isolated signal transfer device of which the primary and secondary sides are isolated from each other), an anode is connected to the terminal A3, and a cathode is connected through the resistor R5 to the terminal A2. In the secondary side of the photocoupler P1, a collector is connected through the resistor R3 to the positive-side conductor (to between the terminal A1 and the switching device S1), and an emitter is connected through the resistor R4 to the negative-side conductor. In this way, the resistors R3 and R4 and the secondary side of the photocoupler P1 are connected in series between the positive- and negative-side conductors, so that when the secondary side of the photocoupler P1 is conducting, a current passes there.

The gate of the switching device S3 is connected to between the resistors R3 and R4. Thus, during charging of the secondary battery 2, as will be described later, a charge signal is fed to the gate of the switching device S3, and the switching device S3 enters a conducting state.

The resistor R1 has a resistance of 50 Ω, the resistor R2 has a resistance of 150 Ω, the resistor R3 has a resistance of 50 kΩ, the resistor R4 has a resistance of 10 kΩ, and the resistor R5 has a resistance of 100 Ω. Adopted as the current fuse H1 is one that blows out at a rated current of 0.5 A. The electric power network 3 may be, for example, a solar battery, a fuel battery, or the like (with a DC power source, the rectification circuit 11a may be omitted); that is, there is no restriction on the type of the electric power network 3. The load 4 may be, for example, an AC load, a DC load, or the like (with an AC load, an inverter circuit or the like is provided at the discharge side); that is, there is no restriction on the type of the load 4.

Next, the charge operation in the secondary battery protection circuit 1 (the operation of charging the secondary battery 2 by use of the electric power network 3) will be described specifically.

Before the start of charge operation, the switching devices S1 to S3 and the secondary side of the photocoupler P1 are all OFF; thus, the secondary battery 2 supplies electric power to no part of the secondary battery protection circuit 1 except the voltage monitoring IC 13. It is here assumed that the current voltage of the secondary battery 2 is 40 V. As mentioned previously, when the electric power network 3 is connected to the terminals C1 and C2, charge operation starts. At this time, the charger/discharger 11 enters a state in which it can output electric power through the terminals A1 and A2, and applies a voltage Vcc to the terminal A3 to pass a predetermined current through the primary side of the photocoupler P1.

This makes the secondary side of the photocoupler P1 conduct. Moreover, since a charge voltage from the electric power network 3 is applied between the terminals A1 and A2, if the ON resistance of the secondary side of the photocoupler P1 is ignored, a voltage (charge signal) which is a division of the charge voltage by the resistors R3 and R4 is fed to the gate of the switching device S3. This brings the switching device S3 into an ON state (conducting state).

Now that the switching device S3 is in an ON state, furthermore, a voltage which is a division of the charge voltage by the resistor R1 and the variable resistor portion 14 is applied to the gate of the switching device S1. At this time, the voltage monitoring IC 13 is not outputting an error signal, and thus the variable resistor portion 14 has a resistance substantially equal to that of the resistor R2. This brings the switching device S1 into an ON state, and thus the terminal A1 is connected to the positive terminal T1. That is, the positive-side conductor conducts to establish a state in which charging is permitted, and thus the secondary battery 2 starts to be charged.

Thereafter, the charging of the secondary battery 2 progresses gradually. If the internal resistance of the current fuse H1, the ON resistances of the switching devices S2 and S3, etc. are ignored, the current through the current fuse H1 during charging normally is, at most (even when the secondary battery 2 as fully charged yields a voltage of 50 V), approximately

$$50 \text{ V} / \text{(Resistance of Resistor R1} + \text{Resistance of Resistor R2)}$$
$$= 50 \text{ V} / 200 \ \Omega$$
$$= 0.25 \text{ A} \ (< 0.5 \text{ A}).$$

Thus, it does not occur that the current fuse H1 blows out.

The charger-side DC/DC converter 11b monitors, for example, the voltage at the terminals A1 and A2, and when it detects that the secondary battery 2 is fully charged (and yields 50 V), it cuts off the electric power delivery path inside the charger-side DC/DC converter 11b. As a result, the secondary battery 2 ceases to be supplied with electric power (that is, the secondary battery 2 stops being charged).

As described previously, in ordinary charging operation, when the secondary battery 2 is charged properly (that is, until it is fully charged), charging stops. If, however, for example because of the failure of the charger/discharger 11, charging does not stop but continues after full charge, the secondary battery protection circuit 1 performs operation (protection operation) to prevent overcharging of the secondary battery 2. This protection operation will now be described specifically.

When, as a result of continued charging after full charge, the voltage of the secondary battery 2 reaches 51 V, the voltage monitoring IC 13 feeds an error signal to the gate of the switching device S2. This brings the switching device S2 into an ON state.

In this case, the resistor R2 is bypassed, and this makes the resistance of the variable resistor portion 14 negligibly low. Thus, if the internal resistance of the current fuse H1, the ON resistances of the switching devices S2 and S3, etc. are ignored, the current through the current fuse H1 is approximately

$$51 \text{ V} / \text{(Resistance of Resistor R1)}$$
$$= 51 \text{ V} / 50 \ \Omega$$
$$= 1.02 \text{ A} \ (> 0.5 \text{ A}).$$

Thus, the current fuse H1 blows out. That is, since the switching device S2 enters into an ON state, the current through the first current path 12 becomes 0.5 A or more, and thus the current fuse H1 blows out.

As a result, the gate voltage of the switching device S1 is pulled up to the voltage on the positive-side conductor, and this brings the switching device S1 into an OFF state. Thus, the secondary battery 2 stops being charged. The protection operation described above makes it possible to prevent the secondary battery 2 from being charged further. Once the current fuse H1 blows out, the first current path 12 irreversibly enters a non-conducting state, and thus the switching device S1 never again enters into an ON state.

Next, the discharge operation in the secondary battery protection circuit 1 (the operation of discharging the secondary battery 2 to supply electric power to the load 4) will be described specifically.

As mentioned previously, when the load 4 is connected to the terminals D1 and D2 and in addition the load 4 requests supply of electric power, discharge operation starts. In this case, the electric power discharged from the secondary battery 2 is supplied through a body diode of the switching device S1 to the load 4. In this way, electric power is supplied from the secondary battery 2 to the load 4.

As described previously, the secondary battery protection circuit 1 is provided with a charge conductor comprising a positive-side conductor connecting between the positive side of the electric power network 3 and the positive terminal T1 and a negative-side conductor connecting the negative side of the electric power network 3 and the negative terminal T2. Electric power supplied from the electric power network 3 is thus delivered through the charge conductor to the secondary battery 2 to charge the secondary battery 2.

The secondary battery protection circuit 1 is also provided with a switching device S 1 which switches the charge conductor between a conducting and a non-conducting state and thereby permits or inhibits the charging of the secondary battery 2. It is further provided with a volume detector 13 that monitors the voltage of the secondary battery 2 and outputs an error signal when the voltage is excessive, and with a first current path 12 that has one end connected to the positive-side conductor and the other end connected to the negative-side conductor, and through which a current corresponding to the supplied electric power passes.

Other than during charging of the secondary battery 2, the charge signal is not outputted, and thus the first current path 12 remains in a non-conducting state. On the other hand, when the first current path 12 in a conducting state, if the error signal is outputted, the current fuse H1 blows out, and thus the first current path 12 irreversibly enters a non-conducting state. Moreover, the switching device S1 is so configured as to permit or inhibit charging according to the potential between the resistor R1 and the variable resistor portion 14. Specifically, it permits charging when the first current path 12 is in a conducting state, and inhibits charging when the first current path 12 is in a non-conducting state.

Accordingly, when overcharging is detected during charging of the secondary battery 2, the first current path 12 irreversibly enters a non-conducting state, and thus charging is permanently inhibited. This makes it possible to inhibit the secondary battery 2 from ever again being charged once it has entered an overcharged state.

In addition, the first current path 12 remains in a non-conducting state other than during charging of the secondary battery 2 (it can safely be said, in this status, there is no need for protection against overcharging), and this makes it possible to reduce electric power consumption in the first current path 12, etc. Other than during charging, the switching device S1 can be left in a cut-off state; thus, in this status, no electric power needs to be supplied to the gate of the switching device S1, and this helps minimize loss of electric power. The electric power for bringing the switching devices S1 and S3 into an ON state can be supplied from outside.

**Example 2**

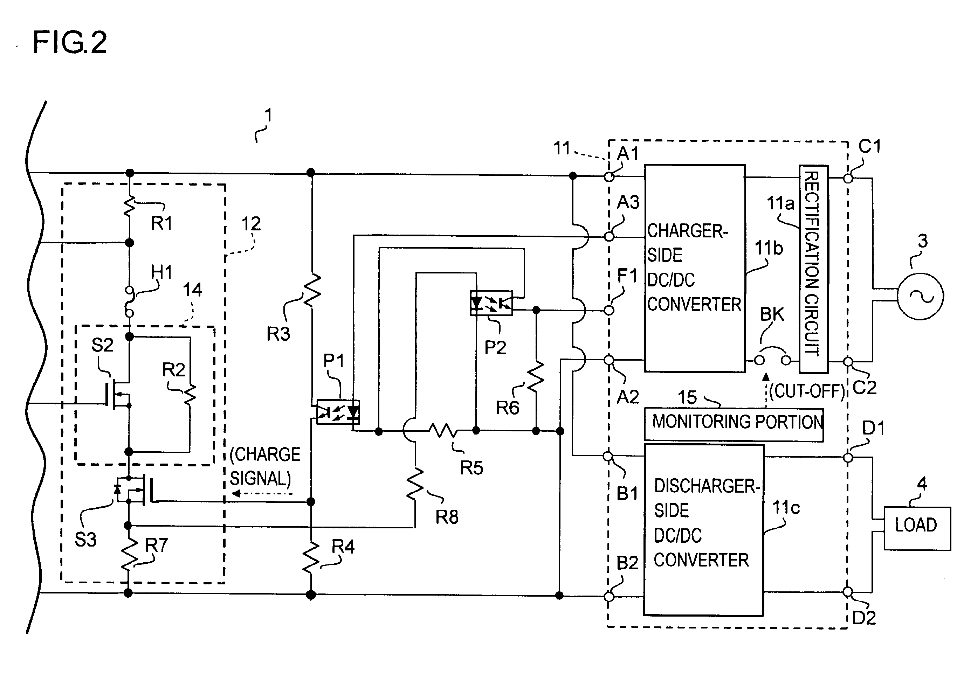

The configuration of a secondary battery protection circuit according to another embodiment (Example 2) of the invention is shown in Fig. 2. The configuration according to this example is basically similar to that according to Example 1, the difference being the additional provision of a monitoring portion 15, a breaker BK, a terminal F1, resistors R6 to R8, and a photocoupler P2 with a view to coping with an "ON failure" of the switching device S 1 (for example, a state in which the switching device S1 fails in an ON state and does not return to an OFF state). Accordingly, not all the description of such parts as are common to Example 1 will be repeated. In Fig. 2, for want of space, (a left) part of the configuration is omitted from illustration; the configuration of the omitted part is the same as in Fig. 1.

The photocoupler P2 has a primary-side diode, which has an anode connected through the resistor R8 to between the source of the switching device S3 and one end of the resistor R7, and which has a cathode connected to the terminal A2. The photocoupler P2 has a secondary-side transistor, which has a collector connected to between the primary side of the photocoupler P1 and one end of the resistor R5, and which has an emitter connected to one end of the resistor R6. The other end of the resistor R7 and the other end of the resistor R6 are connected to the terminal A2.

The charger/discharger 11 is also provided with a terminal F1 for monitoring the potential between the secondary side of the photocoupler P2 and the resistor R6. The charger/discharger 11 is further provided with a breaker BK that can bring into a cut-off state the path connecting between the rectification circuit 11a and the charger-side DC/DC converter 11b (that is, part of the charge conductor).

The monitoring portion 15 continuously monitors information on the voltages at the terminals A3 and F1, detection information (information on the voltage of the secondary battery 2) outputted from the voltage monitoring IC 13, whether or not an error signal is being outputted, etc. When a predetermined condition is met, the monitoring portion 15 brings the breaker BK into a cut-off state. The condition will be described specifically later. The resistor R6 has a resistance of 100 $\Omega$, the resistor R7 has a resistance of 1 $\Omega$, and the resistor R8 has a resistance of 10 $\Omega$.

Next, the charge operation in the secondary battery protection circuit 1 will be described specifically.

Before the start of charge operation, the switching devices S 1 to S3 and the secondary sides of the photocouplers P1 and P2 are all OFF; thus, the secondary battery 2 supplies electric power to no part of the secondary battery protection circuit 1 except the voltage monitoring IC 13. When the electric power network 3 is connected to the terminals C1 and C2, charge operation starts. At this time, the charger/discharger 11 enters a state in which it can output electric power through the terminals A1 and A2, and applies a voltage Vcc to the terminal A3 to pass a predetermined current through the primary side of the photocoupler P1.

The switching device S3 enters an ON state, and thus, furthermore, a voltage which is a division of the charge voltage by the resistor R1 and the variable resistor portion 14 is applied to the gate of the switching device S1. The resistance of the resistor R7 is far lower than the resistance of the resistors R1 and R2, and is therefore ignored here.

At this time, the voltage monitoring IC 13 is not outputting an error signal, and thus the variable resistor portion 14 has a resistance substantially equal to that of the resistor R2. This brings the switching device S1 into an ON state, and thus the terminal A1 is connected to the positive terminal T1. That is, the positive-side conductor conducts to establish a state in which charging is permitted, and thus the secondary battery 2 starts to be charged. Moreover, at this time, a current passes through the primary side of the photocoupler P2, which thus enters an on state; now, in the charger/discharger 11, the voltage at the terminal F1 is substantially equal to the voltage at the terminal A3.

Thereafter, the charging of the secondary battery 2 progresses gradually. If the internal resistance of the current fuse H1, the ON resistances of the switching devices S2 and S3, the resistance of the resistor R7, etc. are ignored, the current through the current fuse H1 during charging normally is, at most (even when the secondary battery 2 as fully charged yields a voltage of 50 V), approximately

$$50 \text{ V} / (\text{Resistance of Resistor R1} + \text{Resistance of Resistor R2})$$

$$= 50 \text{ V} / 200 \ \Omega$$
$$= 0.25 \text{ A} \ (< 0.5 \text{ A}).$$

Thus, it does not occur that the current fuse H1 blows out.

The charger-side DC/DC converter 11b monitors, for example, the voltage at the terminals A1 and A2, and when it detects that the secondary battery 2 is fully charged (and yields 50 V), it cuts off the electric power delivery path inside the charger-side DC/DC converter 11b. As a result, the secondary battery 2 ceases to be supplied with electric power (that is, the secondary battery 2 stops being charged). At this time, the source potential of the switching device S3 is pulled down to the voltage on the negative-side conductor; thus the secondary side of the photocoupler P2 enters an OFF state, and this makes the voltage at the terminal F1 substantially equal to the voltage at the terminal A2.

As described previously, in ordinary charging operation, when the secondary battery 2 is charged properly (that is, until it is fully charged), charging stops. If, however, for example because of the failure of the charger/discharger 11, charging does not stop but continues after full charge, the secondary battery protection circuit 1 performs operation (protection operation) to prevent overcharging of the secondary battery 2. This protection operation will now be described specifically.

When, as a result of continued charging after full charge, the voltage of the secondary battery 2 reaches 51 V, the voltage monitoring IC 13 feeds an error signal to the gate of the switching device S2. This brings the switching device S2 into an ON state.

In this case, the resistor R2 is bypassed, and this makes the resistance of the variable resistor portion 14 negligibly low. Thus, if the internal resistance of the current fuse H1, the ON resistances of the switching devices S2 and S3, the resistance of the resistor R7, etc. are ignored, the current through the current fuse H1 is approximately

$$51 \text{ V} / (\text{Resistance of Resistor R1})$$
$$= 51 \text{ V} / 50 \ \Omega$$
$$= 1.02 \text{ A} \ (> 0.5 \text{ A}).$$

Thus, the current fuse H1 blows out.

As a result, the gate voltage of the switching device S1 is pulled up to the voltage on the positive-side conductor, and this brings the switching device S1 into an OFF state. Thus, the secondary battery 2 stops being charged. The protection operation described above makes it possible to prevent the secondary battery 2 from being charged further. Now that the current fuse H1 has blown out, the switching device S1 can never again be brought into an ON state.

In a case where an ON failure of the switching device S1 has occurred, however, even when the current fuse H1 blows out, the switching device S1 does not enter an OFF state, and thus, if this status is left to continue, the charging of the secondary battery 2 cannot be stopped. Accordingly, in this example, based on the result of detection by the monitoring portion 15, the breaker BK is brought into a cut-off state so that, even when an ON failure of the switching device S1 has occurred, overcharging of the secondary battery 2 is prevented.

More specifically, the monitoring portion 15 brings the breaker BK into a cut-off state when all the following conditions are met: (a) the charge signal is being outputted; (b) the error signal is being outputted; and (c) the secondary battery 2 is being charged.

When all these conditions are met, it is considered that, although the current fuse H1 has blown out, because an ON failure of the switching device S1 has occurred, the secondary battery 2 continues to be charged. When the breaker BK enters a cut-off state, however, even if an ON failure of the switching device S1 has occurred, the charge conductor path is forcibly cut off, and thus the secondary battery 2 stops being charged.

Whether or not the above condition (a) is met can be determined, for example, by checking whether or not the voltage at the terminal A3 equals Vcc. Whether or not the above condition (c) is met can be determined, for example, by referring to the detection information (information on the voltage of the secondary battery 2) from the volume detector 13. Instead, the monitoring portion 15 may bring the breaker BK into a cut-off state when all the following conditions are met: the charge signal is being outputted; the potential at the terminal F1 is equal to the potential at the terminal A2 (when the current fuse H1 blows out, the potential at the terminal F1 becomes equal to the potential at the terminal A2); and the voltage of the secondary battery 2 continues rising (or a current continues passing through the charge conductor).

In this example, the breaker BK is provided within the charger/discharger 11; in practice, however, the breaker BK may be provided anywhere so long as it can cut off the charge conductor for the secondary battery 2. In this example, when the conditions mentioned above are met, the monitoring portion 15 brings the breaker BK into a cut-off state; instead, the monitoring portion 15 may then output information indicating that those conditions are met to outside.

In this example, when an overvoltage on the secondary battery 2 is detected, the switching device S2 is brought into a conducting state to make the current fuse H1 blow out; in addition, a means for outputting a predetermined overtemperature signal when the temperature of the switching device S1 is higher than a predetermined threshold value may be provided so that, also when the overtemperature signal is outputted, the switching device S2 is brought into a conducting state. With a configuration like this which brings the switching device S2 into a conducting state on occurrence of a situation in which no further charging should take place, it is possible to achieve desired protection.

Incidentally, another possible scheme to cut off the charge conductor on occurrence of an overtemperature on the switching device S1 is with a temperature fuse inserted in the charge conductor. However, in applications where two or more of the present system are connected in series to yield a high voltage-to-ground (in particular, 200 V or higher), no adequate temperature fuses are commercially available at present. This makes it practically difficult to achieve protection against an overtemperature on the switching device S1 with a temperature fuse. By contrast, with the scheme of this example, it is possible to achieve double protection comprising first protection involving the cutting-off of the switching device S1 and second protection involving the cutting-off of the breaker BK on failure of the first protection.

As described above, a secondary battery protection circuit 1 embodying the present invention is provided with a positive terminal connected to the positive electrode of a secondary battery, a negative terminal connected to the negative electrode of the secondary battery, and a charge conductor having a positive-side conductor connected between an external power source and the positive terminal and a negative-side conductor connected between the external power source and the negative terminal, and that delivers electric power supplied from the external power source through the charge conductor to the secondary battery to charge the secondary battery.

Moreover, the secondary battery protection circuit 1 is provided with: a first switch that permits or inhibits the charging of the secondary battery by switching the charge conductor between a conducting and a non-conducting state; a voltage detection portion that monitors the voltage of the secondary battery to output an error signal when the voltage is an overvoltage; and a first current path that has one end connected to the positive-side conductor and the other end connected to the negative-side conductor, and through which a current corresponding to the supplied electric power passes.

The first current path, other than during charging of the secondary battery, is kept in a non-conducting state and, when the error signal is outputted while the first current path is in a conducting state, is irreversibly brought into a non-conducting state by a current of a predetermined amount or more passing therethrough. The first switch, when the first current path is in a conducting state, permits charging and, when the first current path is in a non-conducting state, inhibits charging.

Thus, with the secondary battery protection circuit 1, when overcharging is detected during charging of the secondary battery, the first current path irreversibly enters a non-conducting state, and thus charging is permanently inhibited. This makes it possible to inhibit the secondary battery from ever again being charged once it has entered an overcharged state. In addition, the first current path remains in a non-conducting state other than during charging of the secondary battery (it can safely be said, in this status, there is no need for protection against overcharging), and this makes it possible to reduce electric power consumption in the first current path, etc.

The embodiments by way of which the present invention has been described above are not meant to limit the scope of the present invention; the present invention may be implemented with many modifications and variations made within the spirit of the invention.

**Claims**

1.  A secondary battery protection circuit including

    a positive terminal connected to a positive electrode of a secondary battery and a negative terminal connected to a negative electrode of the secondary battery,
    a charge conductor having a positive-side conductor connected between an external power source and the positive terminal and a negative-side conductor connected between the external power source and the negative terminal,
    the secondary battery protection circuit delivering electric power supplied from the external power source through the charge conductor to the secondary battery to charge the secondary battery,
the secondary battery protection circuit comprising:

a first switch permitting or inhibiting charging of the secondary battery by switching the charge conductor between a conducting and a non-conducting state;
a voltage detection portion monitoring a voltage of the secondary battery to output an error signal when the voltage is an overvoltage; and
a first current path having one end connected to the positive-side conductor and having another end connected to the negative-side conductor, the first current path having a current corresponding to the supplied electric power passing therethrough,

wherein
the first current path, other than during charging of the secondary battery, is kept in a non-conducting state and, when the error signal is outputted while the first current path is in a conducting state, is irreversibly brought into a non-conducting state by a current of a predetermined amount or more passing therethrough, and
the first switch, when the first current path is in a conducting state, permits the charging and, when the first current path is in a non-conducting state, inhibits the charging.

2. The secondary battery protection circuit according to claim 1, wherein

the first current path is formed by a variable resistor portion and a cut-off device connected in series,
the variable resistor portion is formed by a second switch and a predetermined resistor device connected in parallel, the second switch entering into a conducting state when the error signal is outputted, and
when the second switch enters a conducting state, the current passing through the first current path becomes the predetermined amount or more.

3. The secondary battery protection circuit according to claim 2, further comprising:

a charge signal output portion outputting a predetermined charge signal during the charging of the secondary battery,

wherein

the first current path is formed by the variable resistor portion, the cut-off device, and a third switch connected in series, the third switch entering into a conducting state when the charge signal is outputted.

4. The secondary battery protection circuit according to claim 3, wherein
the charge signal output portion has a second current path formed by two bias resistor devices and a secondary side of an isolated signal transfer device connected in series between the positive- and negative-side conductors, and during the charging of the secondary battery, the charge signal output portion passes a current through a primary side of the isolated signal transfer device to make the secondary side of the isolated signal transfer device conduct, so as to output as the charge signal a voltage or a current produced as a result of the secondary side of the isolated signal transfer device conducting.

5. The secondary battery protection circuit according to claim 3, further comprising:

a monitoring portion monitoring whether or not the charge signal is being outputted, whether or not the error signal is being outputted, and whether or not the secondary battery is being charged.

6. The secondary battery protection circuit according to claim 5, wherein
on detecting that the charge signal is being outputted, that the error signal is being outputted, and that the secondary battery is being charged, the monitoring portion outputs a signal indicating that such detection has been made to outside, or cuts off the charge conductor.

7. The secondary battery protection circuit according to claim 2, further comprising:

an overtemperature signal output portion outputting a predetermined overtemperature signal when a temperature of a device forming the first switch is higher than a predetermined threshold value,

wherein
the second switch enters a conducting state also when the overtemperature signal is outputted.

# FIG.1

(OMITTED FROM ILLUSTRATION IN Fig. 2)

EP 2 211 441 A2

FIG.2

**REFERENCES CITED IN THE DESCRIPTION**

**Patent documents cited in the description**

- JP H837737 A
- JP 2001037096 A
- JP 2003132862 A